Europäisches Patentamt

European Patent Office

Office européen des brevets

(11) Veröffentlichungsnummer: **0 401 169**
**A2**

(12) **EUROPÄISCHE PATENTANMELDUNG**

(21) Anmeldenummer: 90810381.5

(22) Anmeldetag: 23.05.90

(51) Int. Cl.5: **B32B 21/04, B32B 31/18,**
**B27D 1/00, A41D 31/02**

(30) Priorität: 02.06.89 CH 2086/89
08.09.89 CH 3281/89

(43) Veröffentlichungstag der Anmeldung:
05.12.90 Patentblatt 90/49

(84) Benannte Vertragsstaaten:
AT BE CH DE DK ES FR GB IT LI NL SE

(71) Anmelder: WOOD WORM DESIGN AG
Seefeldstrasse 45
CH-8034 Zürich(CH)

(72) Erfinder: Ettenhofer, Rudolf
Sonnenbergstrasse 6
CH-8910 Affoltern am Albis(CH)

(74) Vertreter: Feldmann, Clarence Paul et al
c/o Patentanwaltsbüro FELDMANN AG
Postfach Kanalstrasse 17
CH-8152 Glattbrugg(CH)

(54) Verfahren zur Herstellung eines band- oder streifeförmigen Schichtstoffes, danach gefertigter Schichstoff und Verwendung desselben.

(57) Auf einem flexiblen Trägermaterial (1), vorzugsweise eine textile Stoff- oder Kunstlederbahn (1), wird ein Holzfurnier (2) aufkaschiert. Mittels Prägestanzungen (5) wird das Furnier (2) in Furnierplättchen (6) unterteilt. Danach oder gleichzeitig mit der Prägestanzung, wird der so gebildete Schichtstoff in Streifen oder Bänder gestanzt oder geschnitten.

Diese Bänder oder Streifen lassen sich zu Krawatten, Armbänder oder Gürtel verarbeiten.

FIG.3

## Verfahren zur Herstellung eines band- oder streifenförmigen Schichtstoffes, danach gefertigter Schichtstoff und Verwendung desselben.

In der Modebranche besteht seit längerem schon der Wunsch, Holz als natürlichen und dekorativen Stoff einzusetzen. Verschiedene handwerkliche Versuche haben jedoch nicht zum Erfolg geführt. Die Steifigkeit des Materials und das vielfach brettartige Aussehen derartig gefertigter modischer Accessoires wurde vom Publikum abgelehnt.

Es ist daher die Aufgabe der vorliegenden Erfindung, ein Verfahren zu schaffen, mittels dem ein Schichtstoff unter Verwendung von Holz hergestellt werden kann, der die vorbeschriebenen Nachteile vermeidet. Die Erfindung beschreibt auch verschiedene Ausführungsformen dieses Schichtstoffes und deren Verwendung als modische Accessoires.

Das Verfahren zur Herstellung eines band- oder streifenförmigen, dekorativen Schichtstoffes, insbesondere für mo dische Accessoires, weist die im Anspruch 1 aufgezeigten Merkmale auf. Es kann auch ein intarsienartiger Effekt erreicht werden, indem man nach dem Prägestanzen oder Schneiden einzelne Furnierteile entfernt und durch gleichförmige, andersartige Furnierteile ersetzt. Das Holzfurnier des Schichtstoffes kann auch zusätzlich in Bandlängsrichtung prägegestanzt oder geschnitten werden, so dass eine erhöhte Flexibilität erreicht wird und die einzelnen Holzfurnierstücke paillettenartig auf dem Trägermaterial liegen.

In der nachfolgenden Beschreibung ist das erfindungsgemässe Verfahren anhand beiliegender Zeichnungen erläutert und der danach gefertigte Schichtstoff beschrieben. Es zeigt:

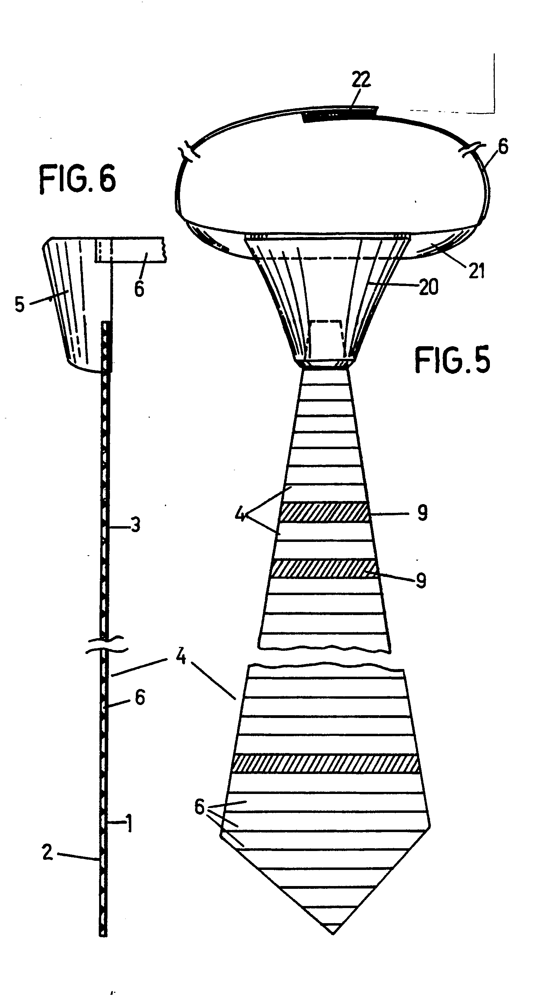

Figur 1 den schematischen Ablauf des Herstellungsverfahrens;

Figur 2 eine Aufsicht auf ein nach dem Verfahren gefertigtes Band;

Figur 3 einen Längschnitt durch dasselbe;

Figur 4 zeigt ein Band in Aufsicht mit zusätzlichen Längsprägestanzungen.

Figur 5 zeigt eine aus dem erfindungsgemässen Schichtstoff gefertigte Krawatte in der Aufsicht;

Figur 6 in Seitenansicht.

Von einem Vorratswickel 10 wird ein Trägermaterial 1 abgerollt. Dies ist vorzugsweise eine textile Bahn oder eine Bahn aus Kunstleder oder Leder. Die Sichtseite dieser Bahn ist nach unten gekehrt. Bei der Leimauftragsstation 11 wird auf der oberen Seite auf das Trägermaterial 1 ein plastisch bleibender Klebstoff aufgerackelt. Von einem zweiten Vorratswickel 12 wird ein Holzfurnier 2 von oben zugeführt. Zwischen zwei Presswalzen 3 wird das Holzfurnier 2 auf die mit Klebstoff versehene Trägerbahn 1 aufkaschiert. Das so entstandene Laminat 3 wird zur Prägestanzstation 14 geführt, wo es mit den erforderlichen Prägungen und Schnitten in band- oder streifenförmigen Schichtstoff zerlegt wird. Die verschiedenen Bänder können gegebenenfalls in verschieden breite Wickel 15 aufgerollt werden.

Aus wirtschaftlichen Gründen wird es meist vorteilhaft sein, das Verfahren als Endlosverfahren in der dargestellten Form zu realisieren. Es kann jedoch, selbstverständlich auch blattförmig gearbeitet werden, dies insbesondere dann, wenn als Trägermaterial echtes Leder verwendet wird. Die einzelnen Arbeitsgänge bleiben dabei dieselben.

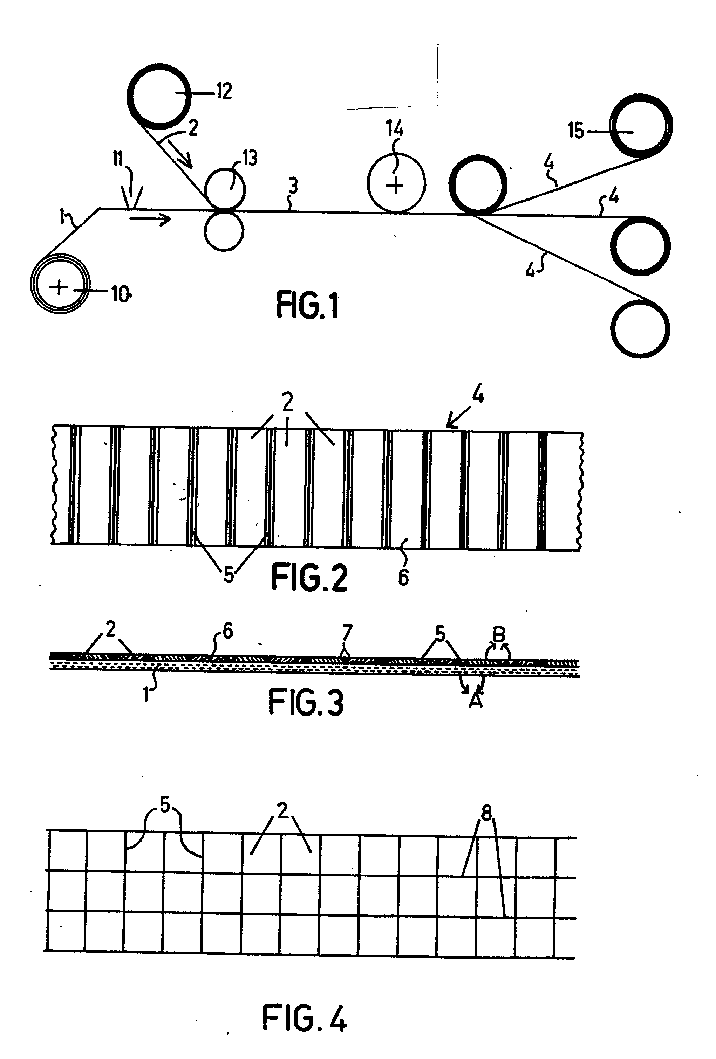

In Figur 2 ist ein Abschnitt eines Bandes aus Schichtstoff dargestellt, welches nachdem voran beschriebenen Verfahren gefertigt ist. Das auf der Rückseite vorhandene Trägermaterial 1 ist auf der Vorderseite nicht ersichtbar. Das Furnier 2 ist durch eine Vielzahl paralleler, in dargestelltem Beispiel rechtwinklig zur Längsrichtung des Bandes verlaufenden Prägestanzungen 5 unterteilt. Die so entstandenen schmalen, rechteckigen Furnierplättchen 6 reihen sich lückenlos aneinander. In der Figur 3 erkennt man, dass die Prägestanzungen 5 einen V-förmigen Querschnitt aufweisen. Mit anderen Worten, die zueinander gerichteten Trennflächen 7, zweier benachbarten Furnierteile 6 sind zueinander in V-Form geneigt. Dies ermöglicht eine Verformung des streifenförmigen Schichtstoffes aus der Ebene in Pfeilrichtung A nach unten und in Pfeilrichtung B nach oben. Die Flexibilität des Schichtstoffes kann noch erhöht werden durch zusätzliche Prägestanzungen 8, die gleich ausgestaltet sein können, wie die Prägestanzungen 5 in Längsrichtung des band- oder streifenförmigen Schichtstoffes. Dies ist in Figur 4 dargestellt. Je nach dem optischen Effekt der gewünscht wird, kann die Holzfurnierschicht 2 in einer beliebigen Farbe durchfärbt oder lasiert sein. Um das Material vor Verschmutzung, Verfärbung oder Ausbleichen zu schützen, wird man es vorteilhaft mit einem geeigneten, bekannten Mittel imprägnieren, damit die Oberflächenstruktur des Trägermaterials 1 nicht durch das Furnier 2 hindurch scheint, verwendet man vorteilhaft ein relativ dickes Holzfurnier, mit einer Dicke von circa 0,2 bis 0,5 Millimeter. Noch dickere Furniere sind zwar durchaus möglich, doch ergibt dies wiederum das unerwünschte, brettartige Erscheinungsbild. Daher wird man nur in Ausnahmefällen Holzfurniere mit einer Dicke von mehr als 0,5 Milimeter verwenden.

Der beschriebene Schichtstoff eignet sich vorzüglich zur Herstellung von dekorativen, modischen Accessoires wie beispielsweise Krawatten, Armbänder und Gürtel. Insbesondere auch für die Fertigung von Armbänder für Armbanduhren ist der neue Schichtstoff geeignet. In den Figuren 5 und 6 ist als Ausführungsbeispiel eine Krawatte dargestellt, die aus einem entsprechend gestanzten Streifen 4 besteht. Die Struktur der einzelnen Furnierplättchen 6 ist deutlich ersichtbar. Intarsienartig sind hier einzelne Furnierplät tchen 6 durch andersfarbige Furnierplättchen 9 ersetzt worden. Der Krawattenknopf 20 ist hier ebenfalls aus Holz gefertigt und mit einem Band 21 befestigt, welches sich mit einem Klettverschluss 22 oder anderem System verschliessen lässt. Selbstverständlich könnte der Krawattenknopf 20 auch aus Kunststoff gefertigt sein.

Neben den erwähnten Anwendungsbeispielen kommen weitere Anwendungen selbstverständlich auch in Betracht. Hierbei kann insbesondere an Zierstreifen, Manchetten- oder Kragenbesatz gedacht werden, ohne das nochmals andere Anwendungsbereiche ausser Betracht fielen.

## Ansprüche

1. Verfahren zur Herstellung eines band- oder streifenförmigen Schichtstoffes, insbesondere für modische Accessoires, dadurch gekennzeichnet, dass auf einem textilen oder textilartigen, ledernen oder lederartigen, bandförmigen Trägermaterial ein Holzfurnier aufkaschiert wird und anschliessend in Band- oder Streifenform geschnitten wird, und dass man die als dekorative Schicht dienende Lage aus Holzfurnier mindestens in Querrichtung zur Bandlängsrichtung in regelmässigen Abständen prägestanzt oder schneidet.

2. Verfahren nach Anspruch 1, dadurch gekennzeichnet, dass nach dem Prägestanzen oder Schneiden einzelne Furnierteile entfernt und durch gleichförmige anders artige Furnierteile ersetzt werden.

3. Verfahren nach Anspruch 1, dadurch gekennzeichnet, dass das Holzfurnier zusätzlich in Bandlängsrichtung prägestanzt oder geschnitten wird.

4. Verfahren nach Anspruch 1 oder 3, dadurch gekennzeichnet, dass das auf der Trägerbahn aufkaschierte Holz furnier mittels einer Prägewalze in die gewünschte Aufteilung zerlegt wird und in einem späteren Arbeitsgang aus der beschichteten Bahn, Bänder oder Streifen geschnitten werden.

5. Schichtstoff gefertigt nach dem Verfahren nach den Ansprüchen 1 bis 4, dadurch gekennzeichnet, dass das Trägermaterial eine gewobene Textilbahn ist.

6. Schichtstoff gefertigt nach dem Verfahren nach den Ansprüchen 1 bis 4, dadurch gekennzeichnet, dass das Trägermaterial eine Kunstleder oder Lederbahn ist.

7. Schichtstoff gefertigt nach dem Verfahren nach den Ansprüchen 1 bis 4, dadurch gekennzeichnet, dass das Holzfurnier durchfärbt oder farbig lasiert ist.

8. Schichtstoff gefertigt nach dem Verfahren nach den Ansprüchen 1 bis 4, dadurch gekennzeichnet, dass das Holzfurnier imprägniert ist.

9. Schichtstoff gefertigt nach dem Verfahren nach den Ansprüchen 1 bis 4, dass die zueinander gerichteten Trennflächen zweier benachbarten Furnierteile V-förmig zueinander geneigt sind.

10. Verwendung des Schichtstoffes nach einem der Ansprüche 5 bis 9, dadurch gekennzeichnet, dass es zur Herstellung von Krawatten dient.

11. Verwendung des Schichtstoffes nach einem der Ansprüche 5 bis 9, dadurch gekennzeichnet, dass es zur Herstellung von Armbänder dient.

12. Verwendung des Schichtstoffes nach einem der Ansprüche 5 bis 9, dadurch gekennzeichnet, dass es zur Herstellung von Gürtel und anderen Gegenständen dient.

FIG.6

FIG.5

FIG.1

FIG.2

FIG.3

FIG.4